# EUROPEAN PATENT APPLICATION

(11) **EP 4 756 648 A1**
(43) Date of publication of application: **10.06.2026**
(21) Application number: 24905111.1
(22) Date of filing: 23.08.2024
(51) Int. Cl.: G06F 16/9535, G06F 16/75, G06Q 30/02

(54) **METHOD AND APPARATUS FOR CONTENT RECOMMENDATION, DEVICE, MEDIUM, AND PROGRAM PRODUCT**

(71) Applicant: Lemon Inc., Grand Cayman, KY1-1205 (KY)
(72) Inventor: CHEN, Xinxi, Los Angeles, CA 90066 (US); LIN, Weijian, Los Angeles, CA 90066 (US); XIE, Tianyu, Los Angeles, CA 90066 (US); ZHU, Junxue, Los Angeles, CA 90066 (US)
(74) Representative: Isarpatent
(86) International application number: PCT/SG2024/050537
(87) International publication number: WO 2026/043414

(57) **Abstract**

According to embodiments of the disclosure, a method, apparatus, device, medium and program product for content recommendation for content recommendation are provided. The method includes: determining, in response to receiving a supply request for target recommended content, category information corresponding to the target recommended content, the category information indicating a target category to which the target recommended content is classified and/or at least one category related to the target category; obtaining historical behavior data associated with a category indicated by the category information, the historical behavior data indicating at least one behavior performed by an audience group on recommended content of a corresponding category in response to the recommended content being provided to the audience group; and determining, based on the historical behavior data, a target audience group corresponding to the target recommended content, to provide the target recommended content to at least a part of members in the target audience group.

## Description

### FIELD

Example embodiments of the present disclosure generally relate to the field of computer technologies, and in particular, to a method, apparatus, electronic device, computer-readable storage medium, and computer program product for content recommendation.

### BACKGROUND

The Internet provides access to a wide variety of resources. For example, the Internet provides access to various applications, commodities, audio and video content, and so on. In addition, content delivery and service promotion through the Internet have become commonplace as a new form of information propagation. Advertising systems support the display of recommended content or services to users in different advertisement exposure opportunities so that users can browse and obtain the corresponding services according to their needs.

### SUMMARY

In a first aspect of the present disclosure, a method for content recommendation is provided. The method includes: determining, in response to receiving a supply request for target recommended content, category information corresponding to the target recommended content, the category information indicating a target category to which the target recommended content is classified and/or at least one category related to the target category; obtaining historical behavior data associated with a category indicated by the category information, the historical behavior data indicating at least one behavior performed by an audience group on recommended content of a corresponding category in response to the recommended content being provided to the audience group; and determining, based on the historical behavior data, a target audience group corresponding to the target recommended content, to provide the target recommended content to at least a part of members in the target audience group.

In a second aspect of the present disclosure, an apparatus for content recommendation is provided. The apparatus includes: a category determining module configured to determine, in response to receiving a supply request for target recommended content, category information corresponding to the target recommended content, the category information indicating a target category to which the target recommended content is classified and/or at least one category related to the target category; a data obtaining module configured to obtain historical behavior data associated with a category indicated by the category information, the historical behavior data indicating at least one behavior performed by an audience group on recommended content of a corresponding category in response to the recommended content being provided to the audience group; and an audience determining module configured to determine, based on the historical behavior data, a target audience group corresponding to the target recommended content, to provide the target recommended content to at least a part of members in the target audience group.

In a third aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the device to perform the method of the first aspect.

In a fourth aspect of the present disclosure, a computer-readable storage medium is provided. The medium has computer-executable instructions stored thereon, the computer-executable instructions, when executed by a processor, implementing the method of the first aspect.

In a fifth aspect of the present disclosure, a computer program product is provided. The computer program product is tangibly stored in a computer storage medium and including computer-executable instructions, the computer-executable instructions, when executed by a device, causing the device to perform the method of the first aspect.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic diagram of an example environment in which embodiments of the present disclosure can be implemented;
FIG. 2 illustrates a flowchart of a process for content recommendation according to some embodiments of the present disclosure;
FIG. 3 illustrates a flowchart of a method for content recommendation according to some embodiments of the present disclosure;
FIG. 4 illustrates a block diagram of an apparatus for content recommendation according to some embodiments of the present disclosure; and
FIG. 5 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

It should be understood that the data involved in the technical solution (including but not limited to the data itself, the obtaining or use of the data) should follow the requirements of the corresponding laws and regulations and related regulations.

It should be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user. Thereby, the user can autonomously choose whether or not to provide the personal information to software or hardware, such as an electronic device, an application, a server, or a storage medium, that performs the operation of the technical solution of the present disclosure based on the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "disagree" to provide personal information to the electronic device.

It should be understood that the foregoing notification and obtaining a user authorization process is merely illustrative, and does not constitute a limitation on implementations of the present disclosure, and other manners of meeting related laws and regulations may also be applied to implementations of the present disclosure.

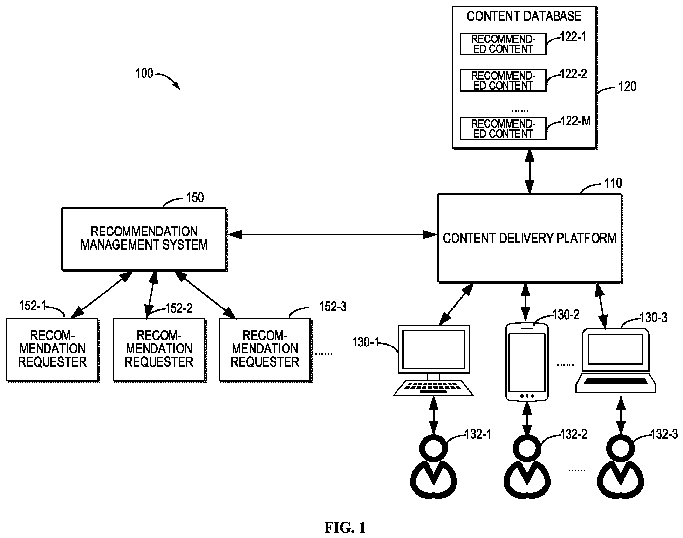

FIG. 1 illustrates a schematic diagram of an example environment 100 in which embodiments of the present disclosure may be implemented. One or more content providers may use a recommendation management system 150 to manage content on a content delivery platform 110. One or more client devices 130-1, 130-2, 130-3, etc. (collectively or individually referred to as a client device 130 for ease of discussion) are associated with the content delivery platform 110 and may access various content provided on the content delivery platform 110, e.g., based on respective audiences 132-1, 132-2, 132-3, etc. (collectively or individually referred to as an audience 132 for ease of discussion). As an example, the content delivery platform 110 may be an application, a website, a web page, and other accessible platforms. The client device 130 may be installed with an application for accessing the content delivery platform 110, or may access the content delivery platform 110 in a suitable manner.

The content delivery platform 110 may be configured to provide one or more particular recommended content (e.g., provided or presented at the client device 130) related to the one or more objects to the audience group based on the corresponding policies. The recommended content to be provided may include, for example, one or more pieces of recommended content 122-1, 122-2, ...... 122-M (collectively or individually referred to as recommended content 122 for ease of discussion) in a content database 120.

Herein, an object may include various recommended objects, examples of which may include applications, entity commodities/services, virtual commodities/services, digital content/entity content, and the like. Herein, "recommended content" refers to content that is presented in order to recommend a corresponding object. Examples of recommended content may include an advertisement. In this context, an audience group may include one or more user members, such as an audience 132. A user member may be any potential consumer of a service, such as a user, group, organization, entity, or the like.

In some embodiments, the content delivery platform 110 may provide the corresponding recommended content 122 to the audience group based on a request by recommendation requesters 152-1, 152-2, 152-3, etc. (collectively or individually as a "recommendation requester" 152). In the scenario of advertisement delivery, a service supplier is sometimes also referred to as an advertiser.

In the environment 100, the client device 130 may be any type of mobile terminal, fixed terminal, or portable terminal, including a mobile handset, desktop computer, laptop computer, notebook computer, netbook computer, tablet computer, media computer, multimedia tablet, personal communication system (PCS) device, personal navigation device, personal digital assistant (PDA), audio/video player, digital camera/camcorder, positioning device, television receiver, radio broadcast receiver, electronic book device, gaming device, or any combination of the foregoing, including accessories and peripherals of these devices, or any combination thereof. In some embodiments, the client device 130 may also support any type of interface for a user (such as a "wearable" circuit, etc. ).

In the environment 100, the content delivery platform 110 and/or recommendation management system 150 may be, for example, various types of computing systems/servers capable of providing computing power, including, but not limited to, mainframes, edge computing nodes, computing devices in a cloud environment, and so forth. Although illustrated separately, one or more of the content delivery platform 110 and/or the recommendation management system 150 may be combined.

It should be understood that the components and arrangements in the environment shown in FIG. 1 are merely examples, and that the computing system suitable for implementing the example embodiments described in this disclosure may include one or more different components, other components, and/or different arrangements.

Generally, the platform may provide the corresponding recommended content to the audience group in accordance with a request by a recommendation requester (e.g., an advertiser) to provide information related to the recommended object to the audience group. The initial stage of the entire provisioning flow of recommended content may include an orientation stage to indicate the audience group to be delivered, or to delineate the scope of the audience group to be delivered. In a subsequent stage, it is determined, based on the specific condition of each audience and the specific condition of the recommended content, whether to provide the recommended content to a particular audience in the audience group in one or more content exposure opportunities within the range of the delineated audience group.

In conventional approaches, the audience group to be delivered is typically manually selected by the recommendation requester. For example, the recommendation requester may provide some interest labels, keywords, and the like, for filtering the audience group to which the recommended content is to be delivered. However, the selection of the recommendation requester may not be accurate, resulting in the recommended content being unable to be provided to a more suitable audience group, which may affect conversion results of users to the recommended content.

According to embodiments of the present disclosure, an optimized content recommendation scheme is provided. According to the scheme, category information corresponding to the target recommended content is determined in response to a supply request for a newly arrived target recommended content being received. The category information indicates a target category to which the target recommended content is classified and/or at least one category related to the target category. Historical behavior data associated with a category indicated by the category information is obtained, and the historical behavior data indicates at least one behavior performed by an audience group on recommended content of a corresponding category in response to the recommended content being provided to the audience group. A target audience group corresponding to the target recommended content is determined based on the historical behavior data, to provide the target recommended content to at least a part of members in the target audience group.

In this way, according to category(ies) related to the recommended content, the historical behavior data for respective category(ies) may be obtained as a reference, so as to adapt to a better matched audience group for the target recommended content. Such an adaptive audience determination process not only reduces the complexity of the recommendation requester's work, but also enables a quick match of an accurate audience group for content recommendation. Thereby, the recommendation requester's trial-and-error cost is reduced, and the conversion effect of recommended content is improved.

Some example embodiments of the present disclosure will be described below with continued reference to the accompanying drawings.

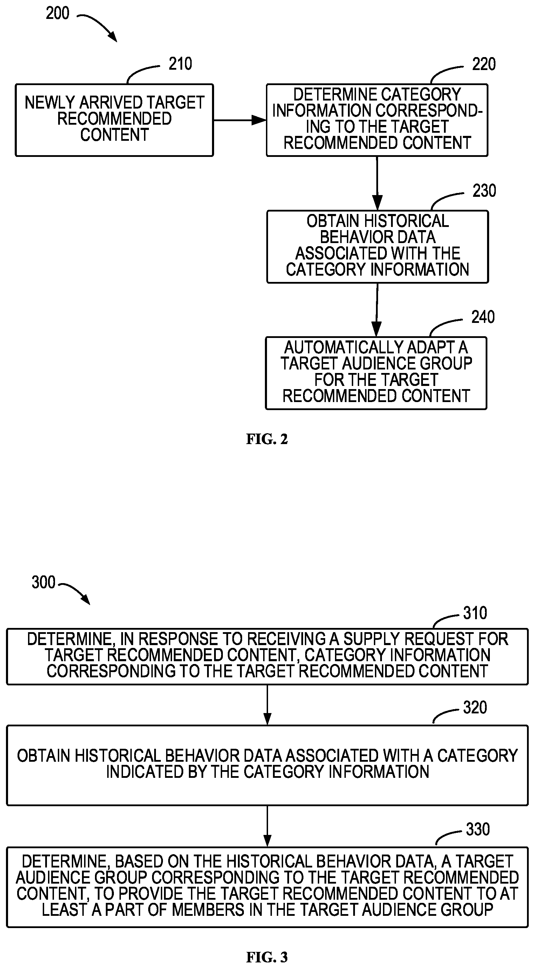

FIG. 2 illustrates a flowchart of an example process 200 for content recommendation in accordance with some embodiments of the present disclosure. The process 200 may be implemented, for example, by the recommendation management system 150 shown in FIG. 1. The process 200 will be described below with reference to FIG. 1.

In the process 200, at block 210, the recommendation management system 150 detects a supply request for a newly arrived target recommended content. The recommendation management system 150 may, for example, be docked to the one or more recommendation requesters 152, such as advertisers. The recommendation requester 152 may determine to provide recommended content related to a particular object to a certain audience group in the content delivery platform 110 as needed.

In some embodiments, the recommendation requester 152 may initiate a supply request for a recommendation plan, the recommendation plan may indicate one or more pieces of recommended content to be provided for the particular object, and may further include a provision time, a period, and bidding information for each provision of the recommended content, and so on.

When providing recommended content, it is usually expected that as many audience members as possible can perform particular behaviors or interactions on the recommended content, which is referred to as conversion of the recommended content. The specific behaviors or interactions observed may be varied, and, for example, may include, but are not limited to, recommended content being clicked, searched, liked, clicked on with interest, commented on, purchased, downloaded, and the like. For particular recommended content, a series of behaviors may be performed by a certain member. The behavior of interest or the behavior that may be performed may be different for recommended content related to different objects. For example, for recommended content corresponding to application products, the conversion behavior may include downloading, while for commodities in online shopping scenarios, the conversion behavior may include being added to the shopping cart and purchased.

At block 220, the recommendation management system 150 determines category information corresponding to the target recommended content. The category information indicates a target category to which the target recommended content is classified. Alternatively or in addition, the category information further indicates at least one category related to the target category.

In some embodiments, the target recommended content or the related recommended content may be classified using a classification machine learning model, to determine a target category to which the target recommended content is classified. In some embodiments, the target category to which the target recommended content is classified may be a category corresponding to an object to be recommended by the target recommended content. For example, the target recommended content may be advertisement content about a certain product, and the category to which the product belongs may be determined based on the advertisement content (for example, an image, a video, a text, etc. ). For example, a product category may be a daily necessities category, a beauty category, a furniture category, an electronics category, and so on. It is noted that only some example categories are given here. In actual scenarios, the category library may be configured according to various types of criteria and according to different granularities, and the target category to which the current target recommended content belongs may be determined from the category library.

In some embodiments, the category library may be configured as a category hierarchy that includes categories having a plurality of hierarchical relationships. In this way, the object corresponding to the recommended content may be classified into a large category (also referred to as a parent category) corresponding to a higher hierarchy, and may also be classified into a specific subcategory under the parent category. For example, if a product is a face cream, the product may be classified into a beauty category (parent category) in a higher category hierarchy, and may also be more specifically classified into a skin care subcategory under the beauty category. It should be understood that such construction of hierarchies for different objects may depend on specific scenarios, and embodiments of the present disclosure are not limited in this respect. Overall, in classifying the target category corresponding to the target recommended content, the target category may be a particular category in the category hierarchy, or may include categories corresponding to a plurality of hierarchies in the target hierarchy.

In some embodiments, in addition to the target category to which the target recommended content belongs, one or more categories related to the target category may also be concerned. This is because, as will be discussed below, in the embodiments of the present disclosure, it is desirable to obtain the historical behavior data under the corresponding category based on the category information of the target recommended content, so as to help determining the target audience group for the target recommended content. In some embodiments, the historical behavior data of the related category may also affect the determination of an audience group for the recommended content of the target category.

When the one or more categories related to the target category are determined, respective degrees of association between the target category and a plurality of candidate categories are determined based on degrees of association between historical behavior data of historical recommended content of the target category when provided to an audience group and historical behavior data of historical recommended content of the plurality of candidate categories when provided to an audience group. The degrees of association here may be, for example, based on a temporal association of the occurrence of the behaviors corresponding to the different categories of recommended content. Then, at least one category related to the target category is determined from the plurality of candidate categories based on the respective degrees of association between the target category and the plurality of candidate categories. For example, if a purchase behavior of a user of recommended content in the category of diapers is detected at the same time or within a shorter period of time that the user also detects a purchase behavior of recommended content in the category of beer, it may be determined that degrees of association between the category of diapers and the category of beer are high. In other words, the category of diapers and the category of beer are related categories to each other. Certainly, more related categories may be found by analyzing historical behavior data, in addition to the categories cited here.

At block 230, the recommendation management system 150 obtains historical behavior data associated with a category indicated by the category information, the historical behavior data indicating at least one behavior performed by an audience group on recommended content of a corresponding category in response to the recommended content being provided to the audience group.

As mentioned above, after the recommended content is provided to the audience group, one or more behaviors of the audience group performed on the recommended content may be obtained, including but not limited to: being clicked, searched, liked, clicked on with interest, commented on, purchased, downloaded, and the like. In some embodiments, the historical behavior data indicates a plurality of behaviors performed by an audience group on recommended content of a corresponding category in response to the recommended content being provided to the audience group.

Because the target recommended content is not provided or provided to the audience group for a long time, the behavior of the audience group related to the target recommended content cannot be obtained. Historical behavior data associated with a category may indicate how interested the audience group is in the recommended content for that category, the likelihood of performing a particular behavior, and so forth. Thus, in embodiments of the present disclosure, by referring to historical behavior data corresponding to other recommended content under the same category or a related category, it can help to determine a more accurate and better matched target audience group for the target recommended content.

In some embodiments, the obtained historical behavior data is collected within a predetermined time period, for example, historical behavior data collected over a period of time before the time when the recommendation requester is received. With the updated historical behavior data, the conversion propensity of the audience group for the recommended content at the current time may be captured in a more timely and accurate manner.

In some embodiments, one or more behaviors of interest in the delivery of the target recommended content may be determined, and historical behavior data corresponding to the one or more behaviors of interest may be collected.

In some embodiments, when the historical behavior data is obtained, in addition to the category information of the target recommended content, the content delivery platform for providing the target recommended content, the geographic area providing the target recommended content, and the like may be considered. For example, respective categories of recommended content (which are referred to as similar recommended content or related recommended content to the target recommended content) may be determined from the same content delivery platforms, and/or the geographic areas that are being delivered by the same delivery, and historical behavior data corresponding to the determined recommended content may be obtained.

At block 240, the recommendation management system 150 determines, based on the historical behavior data, a target audience group corresponding to the target recommended content, to provide the target recommended content to at least a part of members in the target audience group.

Historical behavior data may be used to characterize respective conversion behaviors performed by audience groups of recommended content corresponding to a target category and/or its related categories. With historical behavior data, by referencing the characteristics of audience groups that have performed particular behaviors during the historical delivery of recommended content in each category, it is possible to better determine how a target audience group should be determined for the target recommended content.

In some embodiments, the recommendation management system 150 may determine a candidate audience group corresponding to historical behavior data associated with each category indicated by the category information, and determine the target audience group based on the determined candidate audience group. This is because each category (the target category or the related category thereof) can help to determine an audience group that has performed a certain behavior on the recommended content, and then the target audience group corresponding to the target recommended content may be determined by analyzing the audience groups. Since the candidate audience group comprise audience members determined from recommended content under the same or related categories as the target recommended content, and these audience members all perform a certain behavior or some behaviors on the respective recommended content, this implies that these audience members are satisfied with the recommendations of the recommended content under the same or related categories and are likely to perform conversions.

In some embodiments, the recommendation management system 150 may determine target label information corresponding to the target audience group based on the label information corresponding to the determined candidate audience group. In a recommendation system, different audience groups may be marked with respective characteristics or features of the audience groups through label information. The audience group usually having the same label information may also be the same for the conversion of recommended content. Therefore, with the label information corresponding to the candidate audience group filtered by the category information, it may be reasonably determined that the target recommended content to which the target recommended content may be provided with the label information. With the help of the target label information, the target audience group to be used for delivering the target recommended content may be identified from other audience groups.

In some embodiments, the recommendation management system 150 may simply filter the target audience group from the determined candidate audience group. The target audience group may be part or all of members of the candidate audience group.

In some embodiments, the recommendation management system 150 may determine an audience number of the target audience group based on an audience number of the determined candidate audience group. When providing target recommended content, the recommendation requester may not be able to determine the scale of provision of the target recommended content. A candidate audience group determined in aid of the category information can also help to reasonably determine the scale of the target audience group in order to optimize the delivery strategy of the target recommended content.

If the target category or related category indicated by the category information is classified in the category hierarchy, the audience group may also be expanded or narrowed in categories corresponding to a higher or lower category hierarchy. In some embodiments, if the audience number of the candidate audience group determined based on the category information of the target recommended content is too large (for example, exceeds a threshold number), the recommendation management system 150 may determine a sub-category of the target recommended content in the category hierarchy under the target category. Then, the candidate audience group associated with the sub-category is determined from the candidate audience group corresponding to each category indicated by the category information, so as to further limit the candidate audience group, since the sub-category is usually associated with fewer candidate audience groups. Then, the recommendation management system 150 may determine the target audience group from the candidate audience group associated with the sub-category, such as by filtering the target audience group directly therefrom, or by determining label information corresponding to the target audience group, or by determining the number of members of the target audience group.

In some embodiments, if an audience number of the candidate audience group determined based on the category information of the target recommended content is too small (for example, lower than a threshold number), the recommendation management system 150 may determine a parent category including the target category in a category hierarchy. In this way, the category range of the target recommended content may be expanded. The recommendation management system 150 may then determine a candidate audience group associated with the parent category. Specifically, the recommendation management system 150 may obtain historical behavior data associated with the parent category, and determine a candidate audience group associated with the parent category from the historical behavior data. This may achieve further expansion of the candidate audience group because the parent category is typically associated with fewer candidate audience groups. The recommendation management system 150 may determine the target audience group from the candidate audience group associated with the parent category.

In some embodiments, if the historical behavior data indicates a plurality of behaviors performed by an audience group on recommended content of a corresponding category in response to the recommended content being provided to the audience group, respective weights corresponding to the plurality of behaviors may also be assigned. When determining target audience group, the target audience group is determined based on respective weights corresponding to the plurality of behaviors, from a candidate audience group corresponding to each category. In some examples, for a behavior with a higher weight, more target audience members may be determined from the candidate audience groups that have performed the behavior, or more consideration may be given to the label information corresponding to that candidate audience group. For a behavior with a lower weight, there may be no or less consideration of filtering the target audience group from the candidate audience groups that have performed the behavior, or less or no consideration of the label information corresponding to that candidate audience group. In some embodiments, a target audience group may be determined based on historical behavior data from candidate audience groups that have been determined to perform a particular behavior (e.g., a search behavior, a purchase behavior) more frequently, as these audience groups demonstrate a higher likelihood of conversion for a particular category of recommended content.

Alternatively or in addition, if the category information of the target recommended content simultaneously indicates the target category and the at least one category related to the target category, similarly, the corresponding weights may also be separately assigned to the target category and the related category. The target category corresponds to a first weight and at least one category related to the target category correpsonds to a second weight, where the first weight is higher than the second weight. This is because the target category indicates a category to which the target recommended content belongs. In some embodiments, if there is a plurality of related categories, the plurality of related categories may be configured with different second weights according to the degrees of correlation between the related categories and the target category. In determining the target audience group, the target audience group may be determined from the candidate audience group corresponding to each category based on the weights corresponding to each category. In some examples, for a category with a higher weight, more target audience members may be determined from the candidate audience groups associated with that category, or more consideration may be given to the label information corresponding to that candidate audience group. For a category with a lower weight, there may be no or less consideration given to filtering the target audience group from the candidate audience group associated with the category, or less or no consideration given to the label information corresponding to that candidate audience group.

The above embodiments discuss the determination of the audience group of the historical behavior data for the current target recommended content. These embodiments may be implemented separately or in combination to determine a target audience group that is better matched to the target recommended content and more likely to perform conversion.

FIG. 3 illustrates a flowchart of a method 300 for content recommendation according to some embodiments of the present disclosure. The method 300 may be implemented, for example, by the recommendation management system 150 shown in FIG. 1.

At block 310, the recommendation management system 150 determines, in response to receiving a supply request for target recommended content, category information corresponding to the target recommended content, the category information indicating a target category to which the target recommended content is classified and/or at least one category related to the target category.

At block 320, the recommendation management system 150 obtains historical behavior data associated with a category indicated by the category information, the historical behavior data indicating at least one behavior performed by an audience group on recommended content of a corresponding category in response to the recommended content being provided to the audience group.

At block 330, the recommendation management system 150 determines, based on the historical behavior data, a target audience group corresponding to the target recommended content, to provide the target recommended content to at least a part of members in the target audience group.

In some embodiments, determining the category information corresponding to the target recommended content includes: determining respective degrees of association between the target category and a plurality of candidate categories based on degrees of association between historical behavior data of historical recommended content of the target category when provided to an audience group and historical behavior data of historical recommended content of the plurality of candidate categories when provided to an audience group; and determining at least one category related to the target category from the plurality of candidate categories based on the respective degrees of association between the target category and the plurality of candidate categories.

In some embodiments, determining, based on the historical behavior data, the target audience group corresponding to the target recommended content includes: determining a candidate audience group corresponding to historical behavior data associated with each category indicated by the category information; and determining the target audience group based on the determined candidate audience group.

In some embodiments, determining the target audience group based on the determined candidate audience group includes performing at least one of: determining target label information corresponding to the target audience group based on the label information corresponding to the determined candidate audience group; determining an audience number of the target audience group based on an audience number of the determined candidate audience group; or filtering the target audience group from the determined candidate audience group.

In some embodiments, determining the target audience group based on the determined candidate audience group includes: determining, in response to an audience number of the determined candidate audience group exceeding a threshold number, a sub-category of the target recommended content in a category hierarchy under the target category; determining a candidate audience group associated with the sub-category from a candidate audience group corresponding to each category indicated by the category information; and determining the target audience group from the candidate audience group associated with the sub-category

In some embodiments, determining the target audience group based on the determined candidate audience group includes: determining, in response to an audience number of the determined candidate audience group being lower than a threshold number, a parent category including the target category in a category hierarchy; determining a candidate audience group associated with the parent category; and determining the target audience group from the candidate audience group associated with the parent category

In some embodiments, the historical behavior data indicates a plurality of behaviors performed by an audience group on recommended content of a corresponding category in response to the recommended content being provided to the audience group. In some embodiments, determining the target audience group based on the determined candidate audience group includes: determining, based on respective weights corresponding to the plurality of behaviors, the target audience group from a candidate audience group corresponding to each category.

In some embodiments, the category information indicates the target category and at least one category related to the target category. In some embodiments, determining the target audience group based on the determined candidate audience group includes: determining the target audience group from a candidate audience group corresponding to each category based on a first weight corresponding to the target category and a second weight corresponding to at least one category related to the target category, where the first weight is higher than the second weight.

In some embodiments, obtaining the historical behavior data associated with the category indicated by the category information includes: obtaining historical behavior data associated with a category indicated by the category information collected within a predetermined time period.

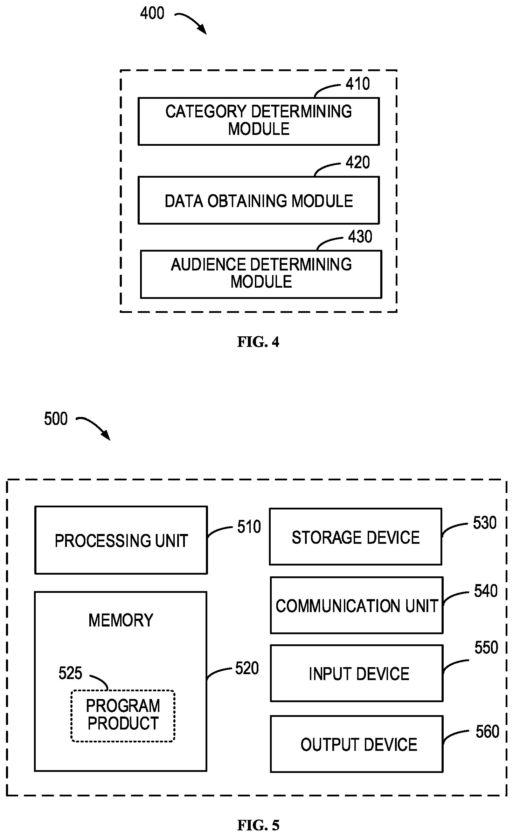

FIG. 4 illustrates a schematic structural block diagram of an apparatus 400 for content recommendation according to some embodiments of the present disclosure. The apparatus 400 may be implemented or included in the recommendation management system 150. The various modules/components in the apparatus 400 may be implemented by hardware, software, firmware, or any combination thereof.

As shown in the figure, the apparatus 400 includes a category determining module 410 configured to determine, in response to receiving a supply request for target recommended content, category information corresponding to the target recommended content, the category information indicating a target category to which the target recommended content is classified and/or at least one category related to the target category.

The apparatus 400 further includes a data obtaining module 420 configured to obtain historical behavior data associated with a category indicated by the category information, the historical behavior data indicating at least one behavior performed by an audience group on recommended content of a corresponding category in response to the recommended content being provided to the audience group.

The apparatus 400 further includes an audience determining module 430 configured to determine, based on the historical behavior data, a target audience group corresponding to the target recommended content, to provide the target recommended content to at least a part of members in the target audience group.

In some embodiments, the category determining module 410 is further configured to: determine respective degrees of association between the target category and a plurality of candidate categories based on degrees of association between historical behavior data of historical recommended content of the target category when provided to an audience group and historical behavior data of historical recommended content of the plurality of candidate categories when provided to an audience group; and determine at least one category related to the target category from the plurality of candidate categories based on the respective degrees of association between the target category and the plurality of candidate categories.

In some embodiments, the audience determining module 430 is further configured to include: determining a candidate audience group corresponding to historical behavior data associated with each category indicated by the category information; and determining the target audience group based on the determined candidate audience group.

In some embodiments, the audience determining module 430 is further configured to: determine target label information corresponding to the target audience group based on the label information corresponding to the determined candidate audience group; determine an audience number of the target audience group based on an audience number of the determined candidate audience group; or filter the target audience group from the determined candidate audience group.

In some embodiments, the audience determining module 430 is further configured to: determine, in response to an audience number of the determined candidate audience group exceeding a threshold number, a sub-category of the target recommended content in a category hierarchy under the target category; determine a candidate audience group associated with the sub-category from a candidate audience group corresponding to each category indicated by the category information; and determine the target audience group from the candidate audience group associated with the sub-category.

In some embodiments, the audience determining module 430 is further configured to: determinine, in response to an audience number of the determined candidate audience group being lower than a threshold number, a parent category including the target category in a category hierarchy; determinine a candidate audience group associated with the parent category; and determinine the target audience group from the candidate audience group associated with the parent category.

In some embodiments, the historical behavior data indicates a plurality of behaviors performed by an audience group on recommended content of a corresponding category in response to the recommended content being provided to the audience group. In some embodiments, the audience determining module 430 is further configured to: determine, based on respective weights corresponding to the plurality of behaviors, the target audience group from a candidate audience group corresponding to each category

In some embodiments, the category information indicates the target category and at least one category related to the target category. In some embodiments, the audience determining module 430 is further configured to: determine the target audience group from a candidate audience group corresponding to each category based on a first weight corresponding to the target category and a second weight corresponding to at least one category related to the target category, where the first weight is higher than the second weight.

In some embodiments, the data obtaining module 420 is further configured to obtain historical behavior data associated with a category indicated by the category information collected within a predetermined time period.

**FIG.** 5 illustrates a block diagram of an electronic device 500 in which one or more embodiments of the present disclosure may be implemented. It should be understood that the electronic device 500 illustrated in FIG. 5 is merely example and should not constitute any limitation on the functionality and scope of the embodiments described herein. The electronic device 500 illustrated in FIG. 5 may be used to implement the client device 130, or the content delivery platform 110, and/or the recommendation management system 150 (or various components thereof). The electronic device 500 may include or be implemented as the apparatus 400 of FIG. 4.

As shown in FIG. 5, the electronic device 500 is in the form of a general-purpose computing device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, a plurality of processing units execute computer-executable instructions in parallel to improve parallel processing capabilities of the electronic device 500.

The electronic device 500 typically includes a plurality of computer storage media. Such media may be any available media accessible to the electronic device 500, including, but not limited to, volatile and non-volatile media, removable and non-removable media. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium, such as a flash drive, magnetic disk, or any other medium, which may be capable of storing information and/or data (e.g., training data for training) and may be accessed within the electronic device 500.

The electronic device 500 may further include additional removable/non-removable, volatile/non-volatile storage media. Although not shown in FIG. 5, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 520 may include a computer program product 525 having one or more program modules configured to perform various methods or behaviors of various embodiments of the present disclosure.

The communication unit 540 is configured to communicate with a further electronic device through a communication medium. Additionally, the functionality of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or a further network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, external devices such as storage devices, display devices, etc., communicate with one or more devices that enable a user to interact with the electronic device 500, or communicate with any device (e.g., a network card, a modem, etc.) that enables the electronic device 500 to communicate with one or more other electronic devices. Such communication may be performed via an input/output (I/O) interface (not shown).

According to example implementations of the present disclosure, a computer-readable storage medium having computer-executable instructions stored thereon is provided, the computer program, when executed by a processor, implementing the method of described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other device, such that a series of operational steps are performed on a computer, other programmable data processing apparatus, or other device to produce a computer-implemented process such that the instructions executed on a computer, other programmable data processing apparatus, or other device implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or behaviors, or may be implemented in a combination of dedicated hardware and computer instructions.

Various implementations of the present disclosure have been described above, which are example, not exhaustive, and are not limited to the implementations disclosed. Many modifications and variations would be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for content recommendation, comprising:
determining, in response to receiving a supply request for target recommended content, category information corresponding to the target recommended content, the category information indicating a target category to which the target recommended content is classified and/or at least one category related to the target category;
obtaining historical behavior data associated with a category indicated by the category information, the historical behavior data indicating at least one behavior performed by an audience group on recommended content of a corresponding category in response to the recommended content being provided to the audience group; and
determining, based on the historical behavior data, a target audience group corresponding to the target recommended content, to provide the target recommended content to at least a part of members in the target audience group.

2. The method of claim 1, wherein determining the category information corresponding to the target recommended content comprises:
determining respective degrees of association between the target category and a plurality of candidate categories based on degrees of association between historical behavior data of historical recommended content of the target category when provided to an audience group and historical behavior data of historical recommended content of the plurality of candidate categories when provided to an audience group; and
determining at least one category related to the target category from the plurality of candidate categories based on the respective degrees of association between the target category and the plurality of candidate categories.

3. The method of claim 1, wherein determining, based on the historical behavior data, the target audience group corresponding to the target recommended content comprises:
determining a candidate audience group corresponding to historical behavior data associated with each category indicated by the category information; and
determining the target audience group based on the determined candidate audience group.

4. The method of claim 3, wherein determining the target audience group based on the determined candidate audience group comprises performing at least one of:
determining target label information corresponding to the target audience group based on the label information corresponding to the determined candidate audience group;
determining an audience number of the target audience group based on an audience number of the determined candidate audience group; or
filtering the target audience group from the determined candidate audience group.

5. The method of claim 3, wherein determining the target audience group based on the determined candidate audience group comprises:
determining, in response to an audience number of the determined candidate audience group exceeding a threshold number, a sub-category of the target recommended content in a category hierarchy under the target category;
determining a candidate audience group associated with the sub-category from a candidate audience group corresponding to each category indicated by the category information; and
determining the target audience group from the candidate audience group associated with the sub-category.

6. The method of claim 3, wherein determining the target audience group based on the determined candidate audience group comprises:
determining, in response to an audience number of the determined candidate audience group being lower than a threshold number, a parent category including the target category in a category hierarchy;
determining a candidate audience group associated with the parent category; and
determining the target audience group from the candidate audience group associated with the parent category.

7. The method of claim 3, wherein the historical behavior data indicates a plurality of behaviors performed by an audience group on recommended content of a corresponding category in response to the recommended content being provided to the audience group, and wherein determining the target audience group based on the determined candidate audience group comprises:
determining, based on respective weights corresponding to the plurality of behaviors, the target audience group from a candidate audience group corresponding to each category.

8. The method of claim 3, wherein the category information indicates the target category and at least one category related to the target category, and wherein determining the target audience group based on the determined candidate audience group comprises:
determining the target audience group from a candidate audience group corresponding to each category based on a first weight corresponding to the target category and a second weight corresponding to at least one category related to the target category, wherein the first weight is higher than the second weight.

9. The method of claim 1, wherein obtaining the historical behavior data associated with the category indicated by the category information comprises:
obtaining historical behavior data associated with a category indicated by the category information collected within a predetermined time period.

10. An apparatus for content recommendation, comprising:
a category determining module configured to determine, in response to receiving a supply request for target recommended content, category information corresponding to the target recommended content, the category information indicating a target category to which the target recommended content is classified and/or at least one category related to the target category;
a data obtaining module configured to obtain historical behavior data associated with a category indicated by the category information, the historical behavior data indicating at least one behavior performed by an audience group on recommended content of a corresponding category in response to the recommended content being provided to the audience group; and
an audience determining module configured to determine, based on the historical behavior data, a target audience group corresponding to the target recommended content, to provide the target recommended content to at least a part of members in the target audience group.

11. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 9.

12. A computer-readable storage medium having computer-executable instructions stored thereon, the computer-executable instructions, when executed by a processor, implementing the method of any of claims 1 to 9.

13. A computer program product tangibly stored in a computer storage medium and comprising computer-executable instructions, the computer-executable instructions, when executed by a device, causing the device to perform the method of any of claims 1 to 9.
